# EUROPEAN PATENT APPLICATION

(11) **EP 4 653 161 A2**
(43) Date of publication of application: **26.11.2025**
(21) Application number: 25175307.5
(22) Date of filing: 09.05.2025
(51) Int. Cl.: B26D 5/24, B26D 7/26, G06F 3/01, G06F 3/048, B26D 1/153, B26D 1/06, B26D 7/06, B26D 7/30, B26D 3/28, G06F 3/0488

(54) **FOOD PRODUCT SLICER WITH GAUGE PLATE POSITION IDENTIFICATION**

(30) Priority: 22.05.2024 US 202418671161
(71) Applicant: Illinois Tool Works Inc., Glenview IL 60025 (US)
(72) Inventor: BIRD, Matthew W., Glenview, 60025 (US)
(74) Representative: HGF

(57) **Abstract**

A food product slicer includes a base, a knife mounted for rotation relative to the base, a carriage assembly mounted to the base for reciprocal movement back and forth past a cutting edge of the knife, and an adjustable gauge plate mounted for movement between a closed position that prevents slicing and multiple open positions that permit slicing at respective thicknesses. A slice thickness identification system is provided, and a slice thickness/gauge plate position targeting graphic may be implemented.

## Description

### TECHNICAL FIELD

This application relates generally to food product slicers of the type commonly used to slice bulk food products and, more specifically, to a gauge plate system in such a food product slicer.

### BACKGROUND

Typical reciprocating food slicers have a rotatable, circular or disc-like slicing blade, an adjustable gauge plate for determining the thickness of the slice and a carriage for supporting the food as it is moved back and forth past the cutting edge of the knife during slicing. A drive motor is typically linked to drive the carriage back and forth during an automatic slicing operation carried out by a controller of the slicer. The gauge plate is situated along the edge of the knife toward the front of a slicing stroke and is laterally movable with respect to the knife for determining the thickness of the slices to be cut. A rotatable adjustment knob is provided manually for setting a spacing between the plane of the gauge plate surface and the plane of the knife edge for the purpose of slicing so that operators can select a thickness of slices to be produced. Existing slicers generally utilize a pin/cam mechanism to translate the rotational motion of the knob into the linear motion of a gauge plate. Moving the gauge plate away from a slicer knife is what allows the operator to choose the slice thickness. Movement of the gauge plate is generally a linear movement of the plane of the gauge plate relative to the plane of the knife edge. The gauge plate has a "closed" position in which the position of the gauge plate is such that slices will not be cut even if the carriage and associated food product are moved back and forth past the knife. When the gauge plate is "open" a range of positions provide for slices of varying thickness.

In prior slicers with the pin/cam mechanism, the cam spiral is generally an exponential spiral (as opposed to a linear spiral), and thus the radial position of the knob does not correspond to an intuitive linear position of the gauge plate. Further, since the knob usually makes more than 1 full rotation, the knob index must be relative. There is a considerable amount of inconvenience built into this design. Operator's must spend time and may waste product adjusting the slice thickness. One of the biggest issues with the current pin/cam designs is the inconsistency that is produced not only between individual machines but also between slicing sessions of one machine. Backlash, relative indexing, and machine-specific alignment often force the operator to rely on subjective interpretation in an attempt to achieve consistent slice thickness.

Existing food product slicers generally utilize a knob with relative indexing to adjust the gage plate location which determines the slice thickness. Some delis, grocery stores, and meat suppliers have developed loose/informal standards for how thick slices should be. Since the knob indexing is relative, there is no sure way of determining or choosing a specific slice thickness selection. Knob index numbers are different for different machines (even from the same manufacturer), the numbers tend to be different between manufacturers as well. The deli operators who use the slicer have no standard within the industry and no standard on the machine itself. Due to lack of standards and difficulty in communicating the customer's desired slice thickness, deli slicing often takes longer than needed and sometimes produces unnecessary waste.

Accordingly, it would be desirable to address one or more of the above-noted issues.

### SUMMARY

In one aspect, a food product slicer includes a base, a knife mounted for rotation relative to the base, a carriage assembly mounted to the base for reciprocal movement back and forth past a cutting edge of the knife, an adjustable gauge plate mounted for movement between a closed position that prevents slicing and multiple open positions that permit slicing at respective thicknesses, and a slice thickness identification system including at least one sensor for determining a position of the gauge plate. A controller is configured to identify an actual slice thickness based upon output from the at least one sensor. A display is provided for communicating information to a slicer operator. The controller is configured to effect display of a slice thickness targeting graphical image to indicate whether the gauge plate is in a position to achieve a defined slice thickness for a slicing operation.

In another aspect, a food product slicer includes: a base; a knife mounted for rotation relative to the base; a carriage assembly mounted to the base for reciprocal movement back and forth past a cutting edge of the knife; an adjustable gauge plate mounted for movement between a closed position and multiple open positions that permit slicing at respective thicknesses, wherein a knob is operatively connected to effect manual position adjustment of the gauge plate; at least one sensor for determining a position of the gauge plate; and a display for communicating information to a slicer operator. A controller is configured to identify gauge plate position based upon output from the at least one sensor, wherein the controller is configured to effect display of a gauge plate position targeting graphical image to indicate whether the gauge plate is in a position to achieve a defined slice thickness for a slicing operation, wherein the graphical image shows a first graphic of a target location and a second graphic of actual location, and a relative position between the second graphic and the first graphic varies as the gauge plate moves.

In another aspect, a food product slicer includes a base, a knife mounted for rotation relative to the base, a carriage assembly mounted to the base for reciprocal movement back and forth past a cutting edge of the knife and an adjustable gauge plate mounted for movement between a closed position that prevents slicing and multiple open positions that permit slicing at respective thicknesses. A slice thickness identification system includes at least one sensor for determining a position of the gauge plate, and a display for displaying a slice thickness indicator corresponding to the determined position.

### BRIEF DESCRIPTION OF DRAWINGS

Fig. 1 is a perspective view of a slicer;
Fig. 2 is a side elevation of the slicer;
Fig. 3 is a perspective view of a gauge plate system;
Fig. 4 is a schematic depiction of a control system;

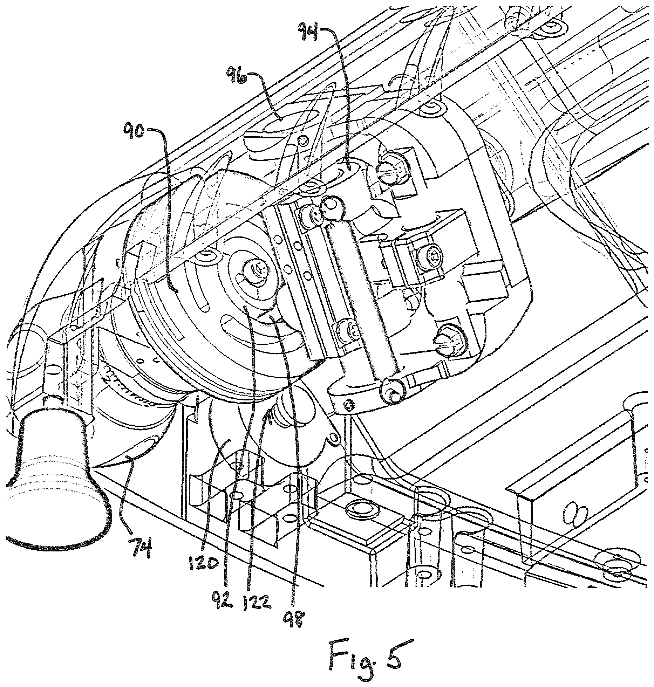

Fig. 5 is a perspective view of a gauge plate system including a motor;
Fig. 6 show an exemplary slicer display;
Figs. 7A-7B show an exemplary slicer display graphic for slice thickness targeting;
Fig. 8 shows another exemplary slicer display graphic for slice thickness/gauge plate position targeting; and
Fig. 9 another exemplary slicer display graphic for slice thickness/gauge plate targeting.

### DETAILED DESCRIPTION

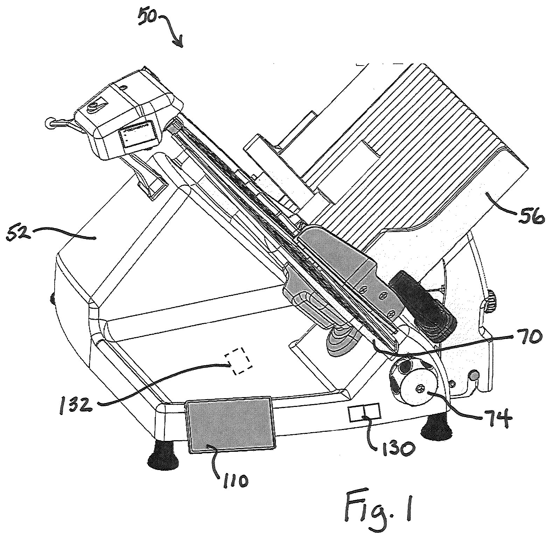

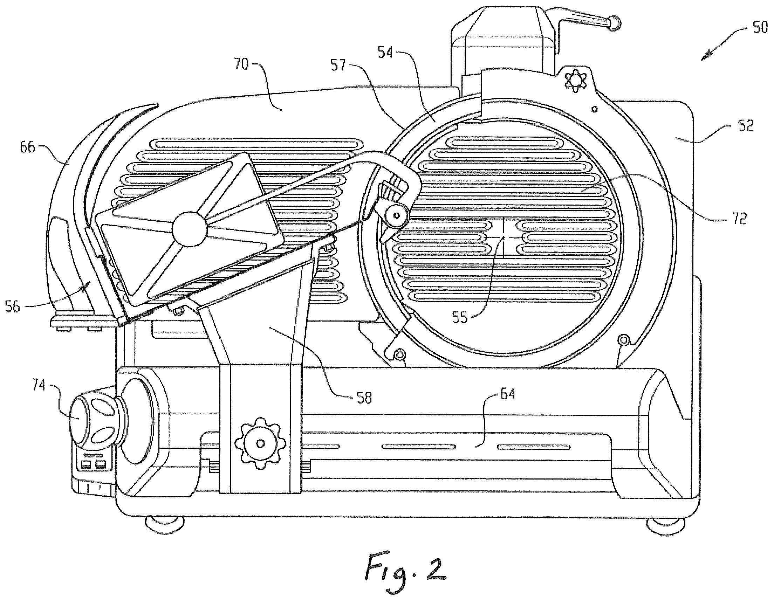

Referring to Figs. 1-2, a food product slicer 50 includes a housing or base 52 and a circular, motor-driven slicing knife 54 that is mounted to the housing for rotation about an axis 55. The left side of Fig. 2, where the controls are located, is generally referred to as the front side of the slicer (which is where an operator stands for slicing), the right side of Fig. 2 is generally referred to as the rear side of the slicer and Fig. 2 depicts a right side view of the slicer. A food product can be supported on a manually operable (or motor driven) food carriage 56 which moves the food product to be sliced past the cutting edge 57 of the rotating slicing knife 54. The food carriage 56 reciprocates from left to right relative to Fig. 2, along a linear path so that the lower end of the bulk food product slides along the surface of the gauge plate 70, is cut by the knife 54 and then slides along a knife cover plate 72. Food carriage 56 includes a tray mounted on a tray arm 58 that orients the food carriage tray at the appropriate angle (typically perpendicular) to the cutting edge plane. The food carriage reciprocates in a slot 64 at a lower portion of the housing 52 and a handle 66 is mounted to the food carriage 56. The handle is graspable by a user and can be used to manually move the food carriage. The carriage may also be automatically driven (e.g., as by a motor 67). A handle or knob 74 for adjusting the gauge plate to control slice thickness is also shown.

Repeatability of slice thickness is the control of slice thickness within a similar product, for example, if a particular machine slices ham at index setting of 4, on the adjustment knob, and that thickness is desirable, the next time a customer comes back to have more ham sliced and that if the index is set on 4 it will cut the same thickness. This theory will also apply from machine to machine repeatability. Prior techniques provided repeatability within a certain degree but not as consistent as desired. The machine to machine repeatability was generally not present.

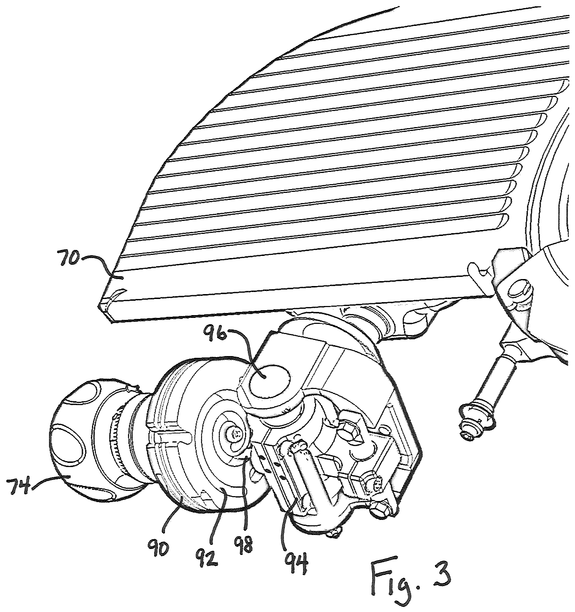

Referring to Fig. 3, a gauge plate system includes a rotatable handle assembly with a handle 74 that rotates a cam 90 with a spiral cam slot 92. The gauge plate 70 is mounted such that adjustment of the slice thickness is achieved by movement of a slider 94 of the gauge plate mount assembly along a shaft 96. The slider 94 includes an associated pin 98 that rides in the spiral cam slot 92 for this purpose.

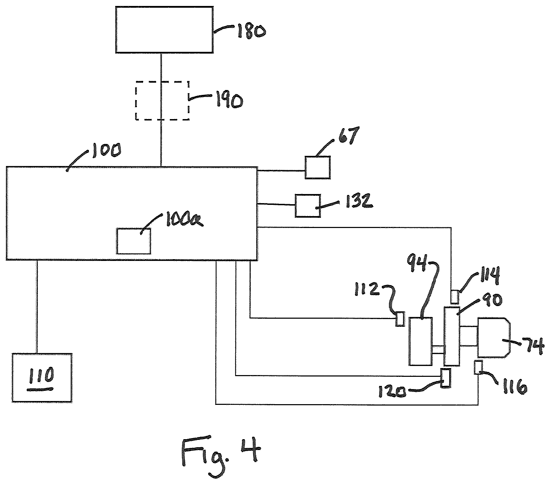

Referring to Fig. 4, a schematic depiction of a slicer with a gauge plate thickness control is provided. A display 110 provides a digital readout of the actual gauge plate position. This will give a precise measurement for the slice thickness that is repeatable (even if there is no stepper motor being used to move the gauge plate). The display 110 could, in one embodiment, be a touch-screen display used as a user-interface. In other embodiments, the display 110 could be a display device that only functions to output the gauge plate position information.

One exemplary technique of identifying slice thickness based upon position of the gauge plate is to utilize a capacitive array 112 to detect motion/position. As the slider 94 moves, AC voltages are picked up and interpolated to determine position (e.g., with .0002" accuracy over ~6 inches). This technique involves a need for zeroing because the capacitive array 112 provides a relative measurement. Zeroing can occur upon slicer power-up automatically or every time the gauge plate is closed completely, as indicated by a gauge plate closed switch 114 tripping to rezero the measuring device. Linear or rotational embodiments are contemplated.

Another technique of measurement or determination of slice thickness based upon position of the gauge plate is to use an encoder 116. By way of example, an encoder uses a light source and a photodetection device is provided and a disk passes between the light source and light sensor. This disk is "coded" in such a way that provides the software (e.g., in a controller 100) enough information to determine where the disk is rotationally. If the controller 100 knows the rotational position of the indexing cam 90, the controller 100 can interpolate where the gauge plate is (e.g., known points could be stored in memory to match rotational data points of the indexing cam with the corresponding linear data points of the gauge plate). Linear or rotational embodiments are contemplated.

A small stepper motor 120 could be provided for powered rotation of the knob 74, and thus powered positioning of the gauge plate. In such an embodiment, the gauge plate system can be designed so that there are two possible inputs: (i) the stepper motor 120 can control the gauge plate position or (ii) the operator can manually rotate the knob 74 to control gauge plate position. The stepper motor 120 may include a geared connection 122 to the cam 90 for effecting the powered cam movement. In this embodiment, and encoder internal of the stepper motor could be used for monitoring position of the cam 90, and thus position of the gauge plate.

The controller 100 can include memory 100a and a stored memory function for one or more high-use thicknesses, which are stored and selected by the operator to quickly and accurately achieve the same slice thickness repeatedly, with the controller 100 responsively driving the stepper motor 120 in accordance with the selection.

A standard practice for slicing a chunk of meat is to cut off a large unusable section of the chub before slicing. The slicer controller 100 can be programmed to initially drive the stepper motor 120 to move the gauge plate to automatically cut this first section off at a predetermined thickness and then, for the purpose of the next slices, immediately drive the stepper motor 120 to move the gauge plate to a position to achieve a different selected/desired slice thickness without stopping and without operator input. In one operating mode, the controller 100 of the food product slicer 50 stores in the memory a first section thickness, and the controller 100 is configured to drive the motor 120 to the first section thickness for a first slice then adjust the motor 120 to another predetermined thickness, which typically would be less than the first thickness, for the subsequent slices. In embodiments, this operating mode may be selected and/or may be selectively enabled and disabled as desired via the user interface (e.g., touch-screen display 110).

In combination with a scale, the controller 100 could be configured to automatically adjust slice thickness to achieve and maintain a desired weight per slice. It is often difficult to maintain an exact weight for each slice as most chunks of meat vary in cross sectional area, and for some applications this featured would be desirable. By way of example, the controller could be configured with a thickness adjust feature to adjust gauge plate position to achieve a relatively uniform slice weight (e.g., if the incremental weight of each slice drops below a set range, the gauge plate could be driven to further open until the incremental slice weight comes back in range or if the incremental weight of each slice rises above a set range the gauge plate could be driven to close slightly until the incremental slice weight comes back into range).

It is to be clearly understood that the above description is intended by way of illustration and example only and is not intended to be taken by way of limitation. Variations are possible.

For example, various types of sensors could be used for determining the position of the gauge plate, such as a linear potentiometer, and infrared distance sensor, or an imaging system sensor (e.g., camera). In any such case, the sensor may sense the position of the gauge plate directly (e.g., sensing position of the gauge plate itself) or may sense the position of the gauge plate indirectly (e.g., sensing position of some part of the indexing assembly that effects movement of the gauge plate). As previously indicated, the sensor could also be an integrated part of the drive motor (e.g., an encoder that outputs counts or steps corresponding to drive motor rotation, with the controller tracking the step count away from the known zero position of the gauge plate). An inductive position sensor could be used. This style of sensing involves a custom PCB (printed circuit board) and a ferritic material that moves relative to the PCB. The ferritic material induces voltage on the board, which can be used to determine location along the PCB. The benefit of an inductive position sensor over other linear encoders is that only a sensor and a simple, passive, ferritic material are needed. In an inductive position sensor, the handler PCB can contain the "sensing" and the "read" part can be attached to the part moving relative to the PCB.

Although a rotatable knob is described above for use in manual adjustment of the gauge plate position, it is recognized that the knob could be eliminated and, for example, buttons (e.g., physical buttons 130 or button images presented on a touch-screen display 110) could be used by an operator to open and close the gauge plate.

In embodiments, the controller 100 could be configured with advanced functionality, such as an auto-close feature by which the controller automatically causes the gauge plate to close upon a predefined condition (e.g., after a set time period of no slicing or after a programmed slice operation has completed). For example, the controller could be configured to close the gauge plate after a certain number of slices have been cut or after a certain weight of slices has been cut (where the slicer includes a load cell 132 for weighing the sliced product).

### Standardized Thickness System

The described food slicer 50 can be implemented in a system that establishes the most common slice thicknesses used and standardizes them on the slicing machine. In embodiments, literature or signs can be posted to inform the customer of the specific options on slice thickness, or the slice thickness information can be displayed on a customer facing display (e.g., display 180) located in the deli department (e.g., where the customer display 180 is linked for communication with the slicer, directly or indirectly through a store computer system 190). Regardless of the form of customer communication implemented, a numbering or lettering system can be used to communicate between the customer and the deli operator what slice thickness is desired, such that both the customer and the deli operator are on the same page or using a common, understood nomenclature. This number/lettering system can be incorporated into the slicer, such that the operator only has to select the desired slice thickness communicated by the customer (e.g., selecting a slicing thickness #3 would cause an automated gauge plate adjustment system to move the gauge plate to a position that is standardized to achieve the corresponding thickness).

In embodiments, the display 180 is independent from the slicer such as a display mounted to the deli counter, or the display could be the display of a customer's mobile device via an app operating on the mobile device. The display 180 could additionally present graphical information such as virtual images and/or animations of the differing deli products cut to their specified standardized thickness and the associated usage for that type of thickness. For example, a #3 slice may be associated with a standardized thickness of 3mm and be used for sandwiches so the display 180 may present the # 3 adjacent to a virtual image of a sandwich with the type of deli item on the sandwich. This display process could be applied to presentation of all standardized thicknesses to the customer (instead of using printed literature) to help the customer make a selection of a standardized thickness.

Table 1 below shows a potential slice thickness distribution. The nomenclature columns refer to what is communicated between the customer and the deli operator. A #1 is as thin as possible without the meat tearing (which would be the verbal equivalent to shaved meat). The other numbers are arbitrary, but could be chosen to closely resemble other verbal/understood slice thickness variations such as: 'very thin', 'sandwich cut', 'dinner cut', etc. Table 1 shows two exemplary nomenclatures, but in practice a single, standardized nomenclature would be used for consistency.

**Table 1. Slice Thicknesses and Exemplary Nomenclature**

| Thickness (mm) | Thickness (inches) | Nomenclature 1 | Nomenclature 2 |
|---|---|---|---|
| 0 | 0 | 1 | Shaved |
| 0.5 | | | |
| 1 | | | |
| 1.5 | 0.63 | 2 | Thin |
| 2 | | | |
| 2.5 | | | |
| 3 | 0.125 | 3 | Sandwich Cut |
| 3.5 | | | |
| 4 | | | |
| 4.5 | 0.188 | 4 | Dinner Cut |
| 5 | | | |
| 5.5 | | | |
| 6 | 0.250 | 5 | Thick |

Implementing and effectively communicating a defined thickness nomenclature would provide numerous advantages. The biggest advantage is the communication between the operator and the deli worker. There should be minimal waste in meat and time as the customer can just communicate what slice thickness they want, and the operator can reliably deliver that slice thickness, since this would be incorporated into the machine (e.g., as a setting). Grocery stores will be able to more efficiently serve customers at the deli. No longer will there be a need to have the customer check the slice thickness if they already know what the slice thickness will be. Grocery stores would have less waste from the slicer operator choosing the wrong slice thickness and the customer asking for thinner/thicker. The learning curve for slicer operators would also be lowered.

In one implementation, the majority of slicing is broken up into four major slice thickness categories: Shaved (pile of ultra thin); Thin, Medium (sandwich cut) and Thick (dinner cut). Most end-user customers will not be able to differentiate between slight variations in thicknesses within a category. The slicer controller 100 could be configured to dictate these categories of slice thickness, as opposed to numbers. The slicer user interface (e.g., via display 110) would communicate to the operator if the gauge plate was ready to slice shaved, thin, medium, or thick (e.g., by displaying "Shaved" or "Thin" etc.). Additionally, this information could be communicated to the customer in a deli setting such that the customer just needs to select from the 4 different options (shaved, thin, medium, thick). This would simplify the communication at the deli counter between the customer and the slicer operator.

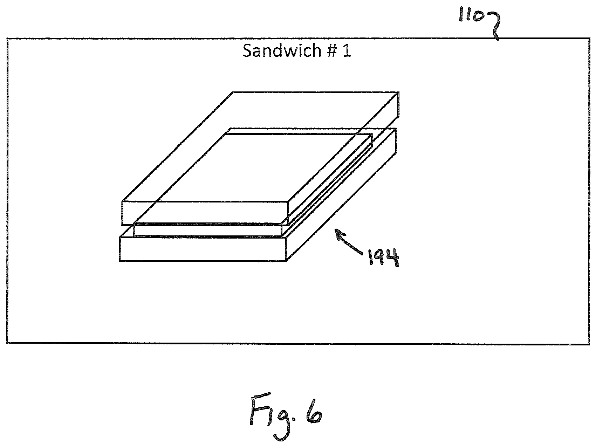

Some food service providers will desire these larger categories to be a specific slice thickness. Accordingly, in embodiments, the specific slice thickness could programmed to an image of the product being sliced. For example, if fast food chain XYZ makes sandwich #1 on their menu at a slice thickness of 1mm, the display could show an image 194 of sandwich #1 on the screen 110 when the gauge plate is open to the exact position that will slice 1mm (e.g., per Fig. 6).

### Gauge Plate Position Targeting for Operators

Where the food product slicer 50 includes a gauge plate position identification system as described above, the slicer can also be configured to communicate to the operator, while the operator is seeking to set the thickness, the actual position of the gauge plate in relation to a desired gauge plate location. The operator can set up a desired slice thickness for a specific product (e.g., maybe they often slice ham at 1 mm). This can be stored in memory of the controller 100 as a selectable thickness (e.g., selectable via a preset key/speed key/etc.). When this preset is selected is selected by the operator, the controller 100 will provide feedback to the operator about whether the desired slice thickness has been achieved or not (e.g., feedback communicated via the slicer display 110 as the operator is rotating the gauge plate knob 74). This connects a product or speedkey to a specific slice thickness without the operator having to memorize a number.

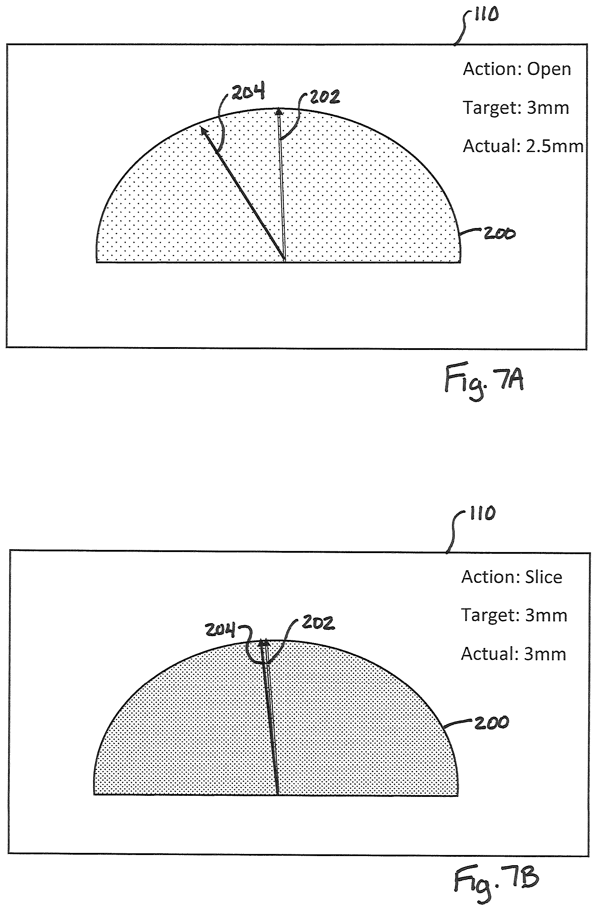

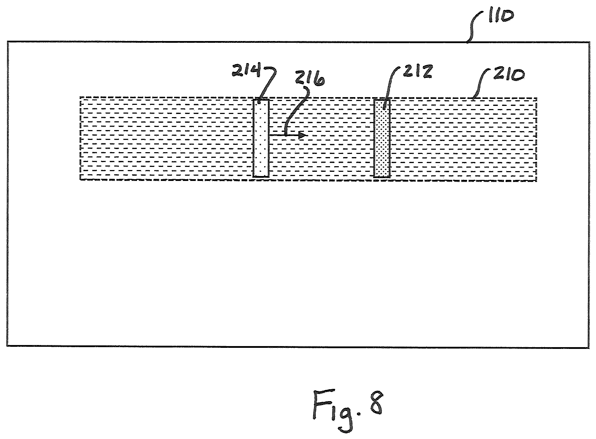

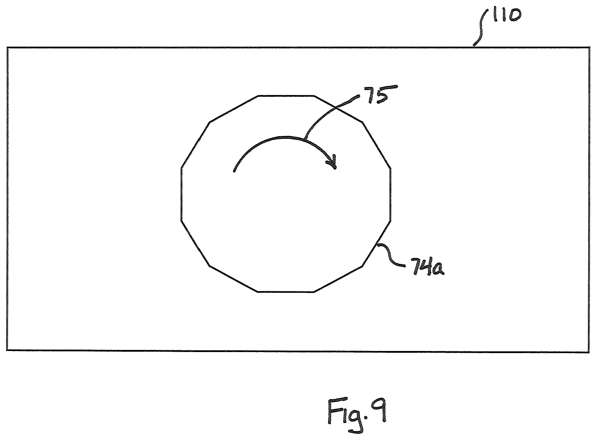

One example of this targeting feature is shown in Figs. 7A-7B. Here, a displayed semi-circular (or full circle) dial 200 could have a line 202 indicating where the target gauge plate position or slice thickness is, and a second line 204 indicating the actual gauge plate position or slice thickness. This allows the operator to sight the gauge plate adjustment into the proper location. Once achieved, the screen/dial could change color (e.g., from red in Fig. 7A, to green in Fig. 7B, as indicated by the different stippling in the dial 200) to indicate the proper slice thickness has been achieved. The numerical value of target thickness and actual thickness may also be displayed, as well as a message that says to open or close the gage plate. Fig. 8 shows an alternative graphical image configuration in the form of a thickness/position bar 210 with a target thickness/position line 212, an actual thickness/position line 214 and a directional arrow 216. Alternatively, per Fig. 9, the controller 100 could be configured to effect display a picture/graphic of the index knob 74a with an arrow 75 indicating the necessary direction of knob rotation to achieve the desired slice thickness. This graphic/message would go away once the appropriate slice thickness has been achieved.

Still other variations are possible.

## Claims

1. A food product slicer, comprising:
a base;
a knife mounted for rotation relative to the base;
a carriage assembly mounted to the base for reciprocal movement back and forth past a cutting edge of the knife;
an adjustable gauge plate mounted for movement between a closed position that prevents slicing and multiple open positions that permit slicing at respective thicknesses;
a slice thickness identification system including at least one sensor for determining a position of the gauge plate;
a controller that is configured to identify an actual slice thickness based upon output from the at least one sensor;
a display for communicating information to a slicer operator;
wherein the controller is configured to effect display of a slice thickness targeting graphical image to indicate whether the gauge plate is in a position to achieve a defined slice thickness for a slicing operation.

2. The food product slicer of claim 1, wherein the controller is configured such that the graphical image is varied as the gauge plate is moved.

3. The food product slicer of claim 2, wherein controller is configured such that a color feature of the graphical image changes when the gauge plate reaches the position to achieve the defined slice thickness.

4. The food product slicer of claim 2, wherein the controller is configured such that display of the graphical image ceases when the gauge plate reaches the position to achieve the defined slice thickness.

5. The food product slicer of claim 1, wherein the controller is configured such that the graphical image shows a first graphic of target location and a second graphic of actual location, and a relative position between the second graphic and the first graphic varies as the gauge plate moves.

6. The food product slicer of claim 5, wherein the first graphic is a first line on a dial graphic, and the second graphic is a second line on the dial graphic.

7. The food product slicer of claim 1, wherein the controller is configured such that the graphical image shows a represent slicer knob and a direction of knob rotation necessary to move the gauge plate to the position to achieve the defined slice thickness.

8. The food product slicer of claim 1, wherein the controller is configured such that display of the graphical image is implemented in response to operator selection of the defined slice thickness.

9. The food product slicer of claim 1, wherein the display is a touch screen display, and the defined slice thickness is a thickness selected via an interface presented on the touch screen display.

10. A food product slicer, comprising:
a base;
a knife mounted for rotation relative to the base;
a carriage assembly mounted to the base for reciprocal movement back and forth past a cutting edge of the knife;
an adjustable gauge plate mounted for movement between a closed position and multiple open positions that permit slicing at respective thicknesses, wherein a knob is operatively connected to effect manual position adjustment of the gauge plate;
at least one sensor for determining a position of the gauge plate;
a display for communicating information to a slicer operator;
a controller configured to identify gauge plate position based upon output from the at least one sensor, wherein the controller is configured to effect display of a gauge plate position targeting graphical image to indicate whether the gauge plate is in a position to achieve a defined slice thickness for a slicing operation, wherein the graphical image shows a first graphic of a target location and a second graphic of actual location, and a relative position between the second graphic and the first graphic varies as the gauge plate moves.

11. The food product slicer of claim 10, wherein the graphical image further includes a directional indicator as to which direction the knob should be rotated in order to move the gauge plate to the position to achieve the defined slice thickness.

12. The food product slicer of claim 10, wherein the display is a touch screen display, and the defined slice thickness is a thickness selected via an interface presented on the touch screen display.

13. The food product slicer of claim 10, wherein the graphical image further includes a background graphic and the first graphic and the second graphic is overlayed on the background graphic, wherein the background graphic is a dial graphic or a bar graphic.

14. The food product slicer of claim 10, wherein the graphical image further includes a background graphic and the first graphic and the second graphic is overlayed on the background graphic, wherein controller is configured such that a color feature of the background graphic changes when the gauge plate reaches the position to achieve the defined slice thickness.
